Europäisches Patentamt

European Patent Office

Office européen des brevets

(11) Publication number: 0 379 755
A1

# EUROPEAN PATENT APPLICATION

(21) Application number: 89300632.0

(22) Date of filing: 24.01.89

(51) Int. Cl.⁵: A47J 37/04, A47J 39/00

(43) Date of publication of application:
01.08.90 Bulletin 90/31

(84) Designated Contracting States:
DE FR GB

(71) Applicant: Hobart Corporation
World Headquarters Building
Troy Ohio 45374(US)

(72) Inventor: Margraf, Dallas A.

Spring Valley Ohio 45370(US)

(74) Representative: Warren, Anthony Robert et al
BARON & WARREN 18 South End Kensington
London W8 5BU(GB)

(54) Rotary continuous conveying oven and cooking chamber therefor.

(57) A continuous convection oven includes rotatable substantially horizontal perforated cylinders (25), each forming a cooking chamber having an inlet (27) and outlet (28), and a removable helical conveying member (35) mounted for rotation with each cylinder, extending at a helix angle opposite to the direction of rotation. High temperature air is directed through a bottom area of the cylinder and impinges directly against the food product therein. The rate of food product movement is controlled according to the type of product being cooked, temperature of circulated air and appropriate cooking time for that product.

Side walls of the helical member (35) urge the product toward the outlet and rotation of each cylinder causes product being carried up the cylinder wall to tumble over and forwardly upon itself. The space between turns of the helical member serves as a conveying channel (38). Portions of the food product are grouped by the helical member, and each group is constantly tumbled both laterally and forwardly in the channel. Simultaneously, heated air impinges on all sides of the product, to cook evenly all sides of an irregular or many-sided food product. Grouped food portions are discharged as an essentially continuous stream, so that operation of the oven is essentially continuous from the standpoint of product input and delivery. A cycle control operates the oven in cooking and self-cleaning modes. In the self-cleaning mode a heater is operated at a temperature sufficient to assure pyrolytic cleaning of interior exposed parts of the oven cavity and cooking chamber, and also actuates a blower and a drive for the cooking chamber during cleaning mode.

FIG - 3

# ROTARY CONTINUOUS CONVEYING OVEN AND COOKING CHAMBER THEREFOR

In recent years, the food equipment industry has placed considerable emphasis on providing equipment for producing foods which are reduced in calorie and fat content. One of the contributing factors to higher fat content is the use of so-called "deep-fried" processes to quickly prepare relatively large quantities of food such as potatoes, onion rings, various seafoods, and other breaded or similarly coated food portions. In commercial cooking practice one or more baskets containing the food portions are lowered into a pool of hot cooking liquid such as melted lard, synthetic shortening, or cooking oil, and a batch of the food is thus fried in this pool. This equipment is generally known as a fryer.

A side effect of this process is that some establishments may mix different food items in a basket or cook them in successive batches, and the hot cooking liquid may tend to carry the taste of one particularly pungent food into another. Some persons find this distasteful, and others may actually have potential problems due to allergies to certain foods such as seafood. The fryers also require rather sophisticated heating and temperature controls, because the cooking liquid must be maintained within a specified temperature limit to avoid low-temperature absorption of the cooking oil (or fat) into the food, and to prevent overheating and degradation of shortening or fat. The oil or shortening must be changed regularly, and the used oil properly disposed of, collected bits of breading and the like cleaned from the pot or pots. More elaborate units may include a recirculating system for the oil and a filter, which also needs servicing.

Several attempts have been made to develop cooking equipment to provide an alternative to deep fat frying. Examples of U.S. patents attempting to meet this objective are: Vogt 4,068,572; Pryputsch, et al 4,503,760; Schneider 3,870,193; Cinter 3,807,292; Vogt 4,203,358 and Langhammer, et al 4,155,294. With the exception of the embodiment illustrated in Figs. 29 and 30 of Vogt US 4,068,572, all of the listed patents are "batch" cookers, i.e., single batches of product are cooked in sequence, with one batch being completely cooked, removed and replaced by the next batch. Although different types of food product are mentioned, the intention appears to be to devote a unit essentially to the preparation of one type of food item at a time. The continuous feed embodiment illustrated in Fig. 29 in Vogt '572 is intended for the specific purpose of making "pommes souffles" which do not contain any residual cooking oil or fat, and appears to be a relatively large device intended for factory-type production of a single product.

In the restaurant business there is a particular need for a single cooking unit which is adequate to serve the needs for french-fried potato strips (so-called "fries") in a "fast food" restaurant. As referred to herein, a fast food establishment is a high food volume, limited menu operation with rapid customer turnover. Many people are served in rapid succession, either by dining in a restaurant section after ordering their food at a counter or by being served at a carry-out window at which food is ordered for off-premise consumption. Obviously, in such high volume operations it is necessary to have a large number of individual batch-type fryers in order to keep up with demand, particularly during peak serving periods.

Thus, there is a need for a continuous feed (as opposed to batch) cooking oven of the convection-type which uniformly cooks products such as fries at a relatively high rate of productivity. In addition, because kitchen space in any restaurant, and particularly in a fast food establishment, is at a premium, the unit must be compact and capable of occupying a minimum of counter or floor space. Especially for consistency and uniformity of product, it is essential that the system be one capable of properly controlling cooking time by controlling the conveying rate of the continuously fed product in accordance with the oven temperature and the state and type of product being cooked. Ability to cook or reheat different types of food products without carry-over of taste or odor, and ease and minimization of maintenance are also features that are needed for this type of cooking service.

In addition, a self-cleaning feature is particularly desirable where such ovens are used in busy restaurant kitchens for long hours of service, for example as are typical fast-food restaurants which may operate from eighteen to twenty-four hours a day, and may use the oven to prepare a variety of quite different products during such a period. No practical self-cleaning convection continuous cooking type ovens are commercially available.

This invention relates to a continuous convection cooking/treating method and system, and a continuously-fed convection oven, operating according to the method, capable of high-productivity. The system includes air impingement cooking in a unit having a conveying system which comprises a rotatable perforated drum or cylinder having an inlet and an outlet, and a product advancing means in the form of a helical guiding and conveying member mounted for rotation with the cylinder. The cylinder defines a cooking chamber mounted for relatively slow speed rotation in an oven cavity through which high temperature cooking air is circulated. The air is directed through an area of the cylinder, and impinges directly against the food product, to maximize cooking efficiency by breaking down the air barrier surrounding individual pieces of the product. The rate of feed of the product through the cylinder is controlled in accordance with the product being cooked, the temperature of the circulated air and the appropriate cooking time for the product at that temperature.

The helical conveying member is mounted (preferably removably) to the cylinder for rotation therewith, and the lead of the helical member is in opposition to the rotational direction of the cylinder. A relatively short cylinder may be therefore equivalent to a narrow conveyor of considerably greater length, while requiring air impingement for a distance no greater than the cylinder length.

As the cylinder rotates, the side walls of the helical member urge the product toward the outlet end and the rotation of the drum is such as to cause the product being carried up the cylinder wall to tumble over and upon itself as the product is also moving forwardly toward the outlet end. Thus, considering the space between successive turns of the helical member as a conveying channel, the portions of food product are segmented and each segment or group of products is constantly tumbling both laterally and forwardly in the channel. Means may be provided along the helix to enhance the tendency of the product to be carried along and up the upwardly rotating side of the cylinder before falling back. Stated differently, the portions are contained within the trough-like channel, and seek their gravitational level as the cylinder rotates, thus moving the portions along toward the discharge end of the channel. Simultaneously with this action, the heated air impinges on all sides of the product, tending to cook all sides of an irregular or many-sided food product. At the exit from the cylinder, the segmented food portions are discharged as an essentially continuous stream, thus the over-all operation of the unit is essentially continuous from the standpoint of product input and delivery, even though the products are segmented into groups of one or more product, depending upon their size, and carried seriatim with each group tumbling while traversing the cylinder.

In the case of cooking items such as sausage links or other generally cylindrical portions, the tumbling action will obviously be different, perhaps more in the nature of a rolling action of individual portions, or one upon the other, depending upon their size and shape. Uniformity of cooking has been observed for a large variety of food products, whether cooked initially, reheated, or finished in the case of partially pre-cooked foods. One limit noted as to the kind of product capable of being treated in this unit is that the surface of the product be essentially non-disintegratable when tumbled and rolled upon each other and upon the perforated surface of the drum or cylinder. Some products have a paste-like or mixed small vegetable filling surrounded by dough or pastry which may be partially fried (par-fried) in an initial preparation step. A number of par-fried products, such as Chinese egg rolls have been cooked with excellent results. The oven also can function as a high volume continuous popcorn popper, and the system of the invention is readily adaptable to special designs dedicated to high volume popcorn production for stadiums, coliseums, meeting halls, etc. where a number of stands, or vendors moving about the premises, may need to be supplied with large amounts.

To achieve considerable residence time for the food products, and to minimize space occupied by the unit, a preferred embodiment utilizes a cabinet which is generally rectangular in plan view, with greater depth than width, i.e. the front and rear are narrower than the sides. Two cooking cylinders are stacked vertically with their axes of rotation horizontal and parallel, extending front to rear in the cabinet. A transfer chute extends from the upper to the lower cylinder at the rear of the unit, whereby food products can be fed into and delivered from the front end of the unit. An air heating and supply chamber directs a stream of hot air into the bottom region of each cylinder, and after passing over and through the cylinders and the contained food portions, the air is collected, drawn through a filter, and recirculated to the supply chamber. This unit thus includes the advantages of a forced convection oven, such as economy of heat transfer and uniformity of heat exchange to the product.

Closures and interlocks, and an integrated control circuit, provide for operating the heater at a temperature sufficiently high to raise the circulating air temperature substantially above cooking temperature and assure pyrolytic cleaning of soil from interior parts of the cavity and any apparatus therein. Certain parts of the cooking chamber can be removed, if desired, during such a cleaning cycle.

The principal object of the invention is to provide a continuous cooking method and a conveyor cooking oven for practicing the method, which enables accurate control of cooking time in accordance with the cooking temperature and the product being cooked; to provide a rotary conveyor cooker of the type described in which the effective length of the conveyor is many times greater than its actual length, whereby the oven may be kept compact in size while utilizing jet impingement air only along the actual length of the cooking device rather than the much greater effective length of the conveyor; to provide in such a cooking oven a perforated cooking cylinder with a product-advancing means in the form of helical guiding and conveying member which is easily removable from the cylinder for ease of cleaning; to provide a continuous conveyor oven of the rotary type in which different food products may be placed in the conveyor seriatim and wherein the structure of the conveyor inherently maintains the products segregated during cooking; to provide heater controls and interlocks and closures which permit a pyrolytic cleaning cycle of the oven, and which may inhibit such cleaning unless access to the oven cavity is prevented and may also require certain parts to be removed from the cavity before such a cleaning cycle.

Other objects and advantages of the invention will be apparent from the following description, the accompanying drawings and the appended claims.

Figs. 1 and 2 are diagrammatic views of a part of a cooking chamber, illustrating the method of the invention;

Fig. 3 is a diagrammatic vertical and longitudinal cross-sectional view showing the cooking chambers of a preferred embodiment, together with associated chutes for handling food portion entering, transferring and discharging from the chambers, along with a schematic representation of the drive for rotating the chambers, and showing the progress of food portions through the cooking chambers;

Fig. 4 is a front view of an oven constructed according to the invention;

Fig. 5 is a front view with the door and front wall removed to show the layout of the parts of the oven;

Fig. 6 is a rear view similar to Fig. 5, with the rear cabinet wall omitted;

Fig. 7 is a top view with the top wall omitted, and showing a power driven feeding mechanism;

Fig. 8 is a left side view, showing the feeder and discharge port;

Fig. 9 is a side view of the conveying structure for one cooking chamber, shown removed from the chamber;

Fig. 10 is an end view taken from the left of Fig. 9;

Fig. 11 is an enlarged detail view showing a toothed drive wheel engaged with the perforated surface of a cooking chamber;

Fig. 12 is a diagrammatic perspective view showing the air circulating system of the oven;

Fig. 13 is a similar diagrammatic view of a modified form of air circulating system; and

Fig. 14 is an electrical control diagram.

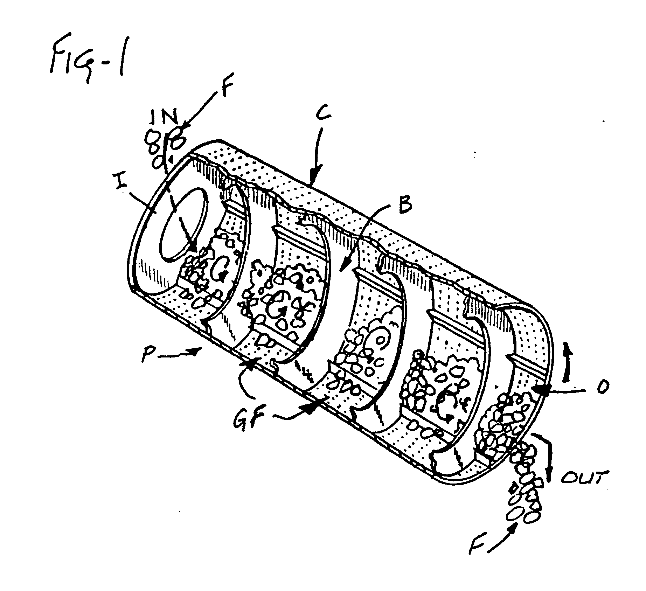

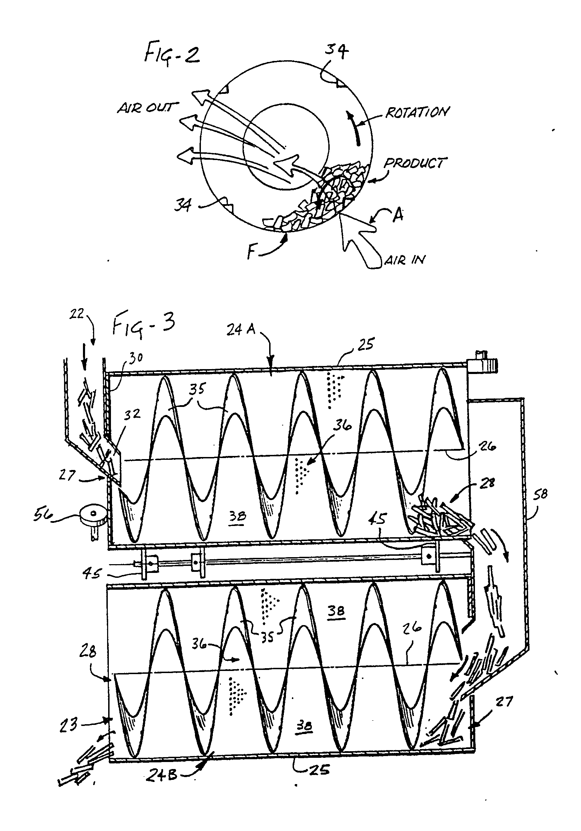

Figs. 1 and 2 illustrate the method of treating food portions to be heated or cooked in accordance with the invention. It should be understood that the term "treated" is intended to encompass cooking (such as baking or roasting), thawing cold or frozen food product, reheating such product, or completing cooking of a partially pre-cooked product. A substantial variety of food products are susceptible to such treatment, including fresh and/or reconstituted vegetable portions, pieces of meat, fowl, prepared meat such as sausages or frankfurters, egg rolls or the like, fruit, vegetable, or ground meat rolled in a pastry cover, and other food products which have sufficient surface tension of the portions, or a coating or covering on the portions, to resist crumbling or breaking apart during the conveying-tumbling operation, and also to resist excessive loss of such a surface coating during the operation. Many of these foods are preferably par-fried for best results.

Basically, the method commences by introducing food portions F, preferably as a continuous flow of such portions, into an oven chamber having a continuously operating conveying means C which operates along a predetermined path P having an inlet I and an outlet 0. The food portions are segregated at the inlet into successive groups GF of one or more portions and then moved seriatim along the conveying means to the outlet, where the groups GF are discharged as an essentially continuous flow of portions F.

During their travel through the chamber, the portion or portions in the groups are tumbled as they move from the inlet to the outlet. This is most efficiently and conveniently accomplished by using a trough-like conveying and treating chamber C fitted with an internal helical conveying member B which functions to move the food portions from the inlet toward the outlet as those portions are carried by the internal surface of the chamber, the groups being moved in a path along the trough-like chamber with force components exerted on the portions in both longitudinal and transverse directions of the trough. This causes portions to be lifted in the direction of the transverse components as they are carried up a side of the trough, and allowed to tumble due primarily to gravitational force in a direction generally along the direction of the transverse components.

Although other methods of moving and tumbling the segregated food portion groups are intended to be encompassed within the invention, the particular method illustrated has advantages from the standpoint of minimizing relative motion between the conveying parts, which in turn avoids pinching, abrading or scraping the surfaces of the food portions. This in turn avoids an undesirable surface appearance and/or the creation of particulate matter (bits of skin, breading, or raw food product) which tend to collect and clog the system. Thus, in the preferred embodiment the conveying member B is a thin band-like wall formed as a helix of multiple turns, and is inserted into and rotates with a generally horizontal perforated cylinder C, the two cooperating to constitute the conveying means. The cylinder is rotated in a direction opposite to the helix progression of member B. Food portions are deposited in the trough-like lower part of the cylinder, and tend to be carried upward on the inner wall of the cylinder, and in so moving, tend to be pushed along toward the outlet end of the cylinder by the member B. The portions tend, due to gravity, to move to the lower part of the cylinder, thus the portions advance to the outlet end moving along the trough-like channel, and not tumbling or spilling over the member B. This inherently results in the food portions being tumbled in the helical or carrying passage space between successive flights (360# extent) of the member B, in a generally forward moving direction. If there are a number of small portions in a group, they will tumble over each other; if only a single portion (e.g. a large sausage) is in the group it will tumble by itself.

During a substantial part of this travel the food portions F are subjected to a forced flow of a heated predominantly gaseous fluid A, such as hot air, preferably by flowing such heated fluid directly against them with sufficient velocity to overcome any boundary layer conditions around the portions, but insufficient to entrain the portions in an air stream or to loosen any coating on them.

Thus a flow of such food portions may be treated in a continuous manner and different types of food portions may be introduced seriatim into the conveying means and segregated by type, without stopping the conveying means and the forced flow of heated fluid, by delaying the introduction of a second different type of food portion from the end of the flow of a first type of food portion. In many instances this may be effectively accomplished without cross-migration of odor or taste between the different types of foods.

Referring specifically to Figs. 3-8 which illustrate the overall arrangement of a preferred embodiment which has been successfully operated, a cabinet defines an outer oven cavity 10 as well as a housing for motors, controls, and the like. The cabinet is rectangular in cross-section, of greater height than width, and has a length at least as great as its height. The cabinet is formed of a front wall 12 including a hinged normally closed door 13 (with a locking latch mechanism later described) providing access to the interior of cavity 10, a rear wall 14, a top 15, side walls 16, and a bottom 18 which is elevated above the lower edges of the front, rear and side walls to form a lower equipment compartment 20.

It will be noted that the side walls are rectangular, vertically elongated, and the front and rear walls are at least as long as the height of the side walls. In a preferred embodiment intended for restaurant kitchen use, the depth of the oven, e.g. the length of the side walls, is approximately 32 inches (81.28 cm.) to fit on a typical kitchen counter. The height of the entire cabinet is about 32 inches, and the side-to-side width is about 18 inches (456.72 cm.). These dimensions are stated solely by way of example, and without any limitation as to shape or size of an oven constructed according to the invention. In the preferred embodiment the side, top and bottom walls, and the door, are actually a composite insulated construction of several panels together with insulation and air space.

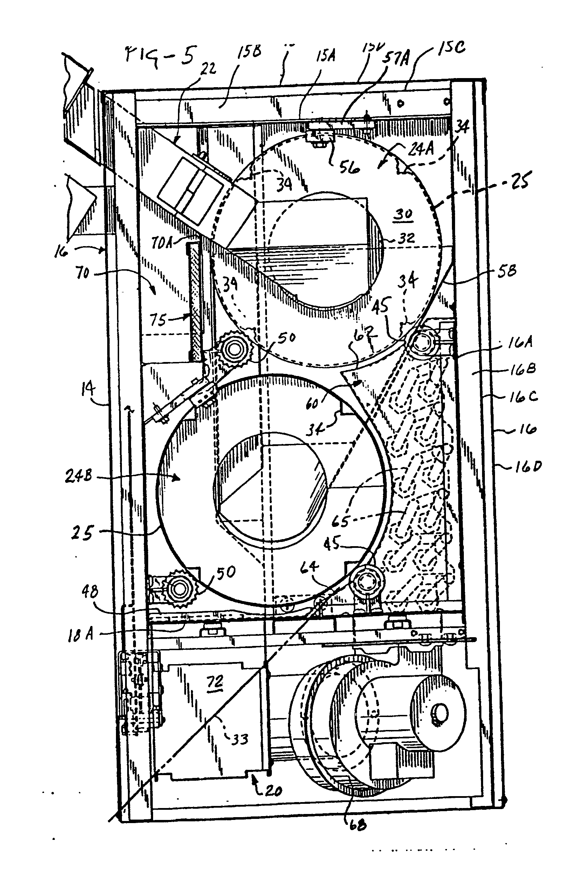

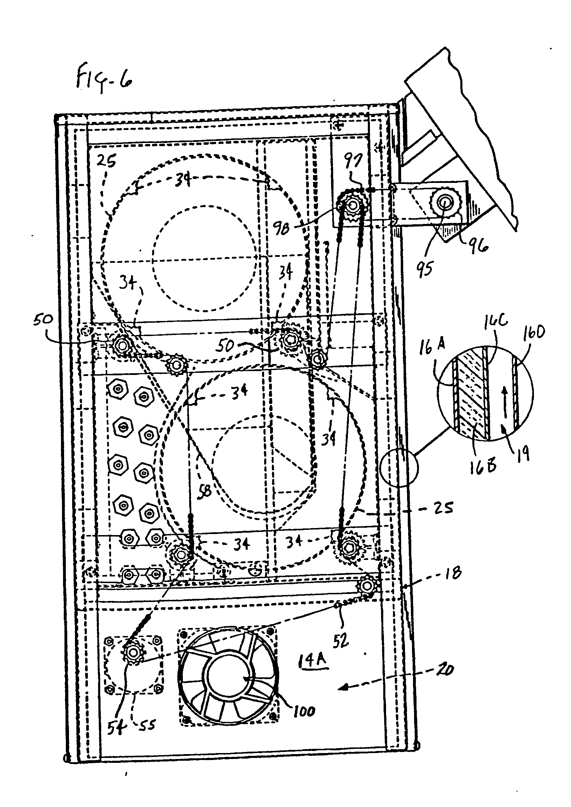

Thus, as shown particularly in Figs. 5 and 6, the rear wall 14, top 15 and side walls 16 comprise inner panels 14A, 15A, 16A, a layer of insulation 14B, 15B, 16B, intermediate panels 14C, 15C, 16C which surround the insulation, and outer panels 14D, 15D, 16D spaced from the intermediate panels to define a cooling air passage or jacket 19 which opens into lower compartment 20. Similarly, door 13 has inner, intermediate, and outer panels containing insulation and an air space therewithin. Bottom 18 also has multiple panels 18A, 18B and intermediate insulation. Provision is made (later described) for circulation of cooling air between panels 18C and 18D..

Adjacent front wall 12 there is an inlet chute 22 extending from the exterior of the cabinet through the left side wall 16 and an outlet chute 23 extending to the exterior of the same side wall for guiding cooked food portions out of the cabinet. The outlet of chute 23 is normally open, but may be closed by a swinging cover plate or door 23D (manually operated) if the oven includes a self-cleaning features as later described.

A pair of cooking and conveying chambers 24A and 24B (corresponding to the cylinder C) each include a perforate cylindrical wall 25 having a longitudinal axis 26 and having an inlet end 27 and an outlet end 28. Within each cooking chamber 24 there is a conveying means in the form of an inlet baffle or plate 30 extending across the inlet end 27 and having a central opening 32 for receiving food portions to be cooked. From the periphery of baffle 30 there extends a plurality of ribs or angle bars 34 (Figs. 5, 6 and 9) which in turn are attached to the edge portion of a helical conveying member 35 which extends from baffle 30 along the interior of said cylindrical wall to the outlet end 28.

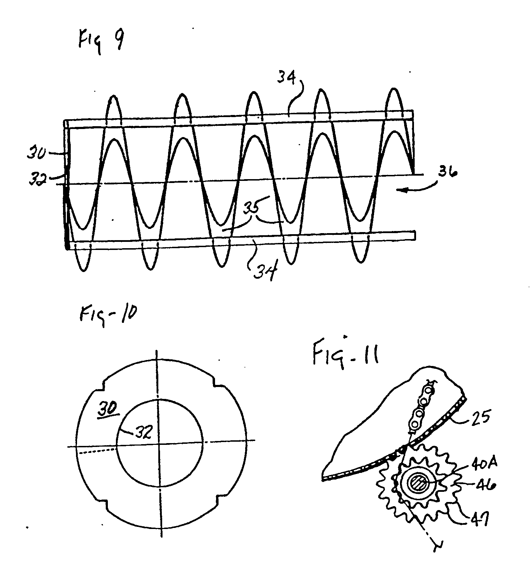

The helical member 35 projects inward part way toward the central or longitudinal axis of cylindrical wall 25, defining an open central passage 36 and a surrounding carrying passage 38 of helical configuration extending to the outlet end 28 of each cooking chamber 24A and 24B. The entire structure of the cooking chambers is preferably constructed of stainless steel or some equivalent material which will withstand heat in excess of 400#F (204.4#C) and which can be cleansed according to health code standards. The connected baffle 30, member 35 and bars 34 may be provided as a separable unit which fits closely within the cylindrical wall 25, and which will tighten securely therein as the parts are heated in normal use. When cooled, the unit (as in Fig. 9) may be pulled from the outer cylindrical wall for cleaning or repair purposes.

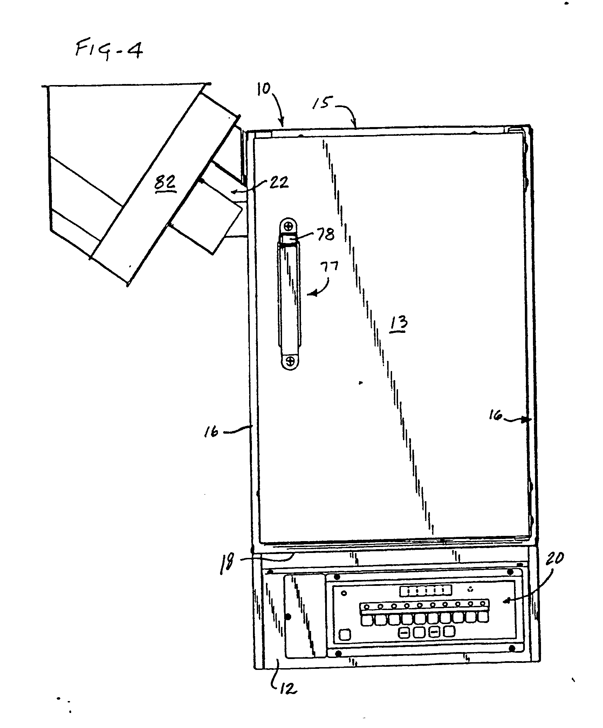

Two pairs of supporting and driving shafts 40A, 40B and 42A, 42B are supported in bearings 44A extending through the rear wall and forward bearings 44B carried in brackets mounted to the inner wall panels of the oven cavity. These shafts are in parallel spaced relation to each other lengthwise of oven cavity 10, at upper and lower levels therein, for holding cooking chambers 24A and 24B, respectively, in cradle-like fashion. It should be noted (Fig. 4) that the two chambers 24A and 24B are supported with their longitudinal axes horizontal and offset from a vertical lengthwise plane through cavity 10, thus reducing the overall vertical dimension of the unit, and also shortening the recirculating air paths as later described. Precise horizontal support of the cooking chambers is not essential, provided the functions of conveying and tumbling of the food products are achieved, however an arrangement as shown, with the axes of the chambers horizontal, does provide greater ease of construction and servicing of the oven.

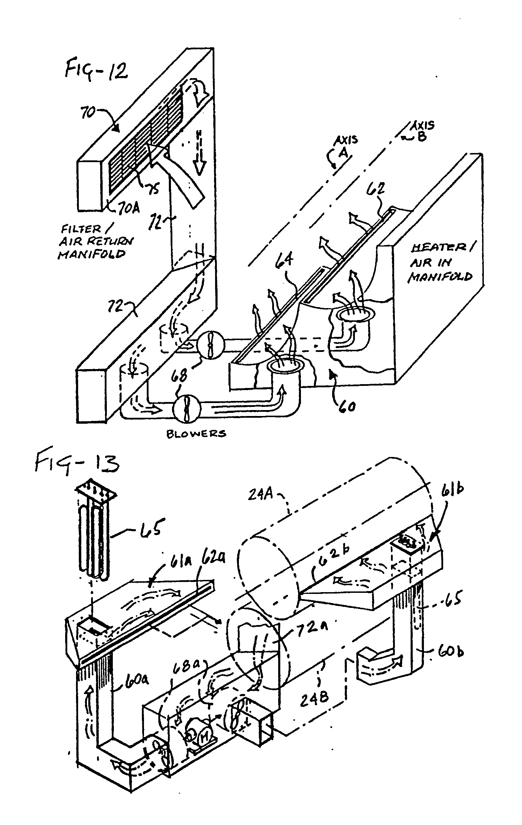

Each of the shafts includes front and rear rollers 45, fixed to the shafts, which actually contact the outer surfaces of the cylindrical walls 25, for example near their inlet and outlet ends. In the embodiment illustrated, toothed drive rollers 46 on the shafts 40A and 42A (see Figs. 5 and 11) interact with the perforations in the walls 25 for a positive drive, although friction drive of the chambers 24A and 24B may be suitable. Rotation of the shafts thus imparts rotating motion to the cooking chambers about their longitudinal axes, yet allows those chambers readily to be removed from the oven cavity for cleaning, maintenance, etc. At the bottom of the oven cavity 10, resting on bottom panel 18A, is a crumb tray 48 which will collect debris such as bits of material which may work their way through the openings in chambers 24A, 24B. This tray can be easily removed to dispose of such debris.

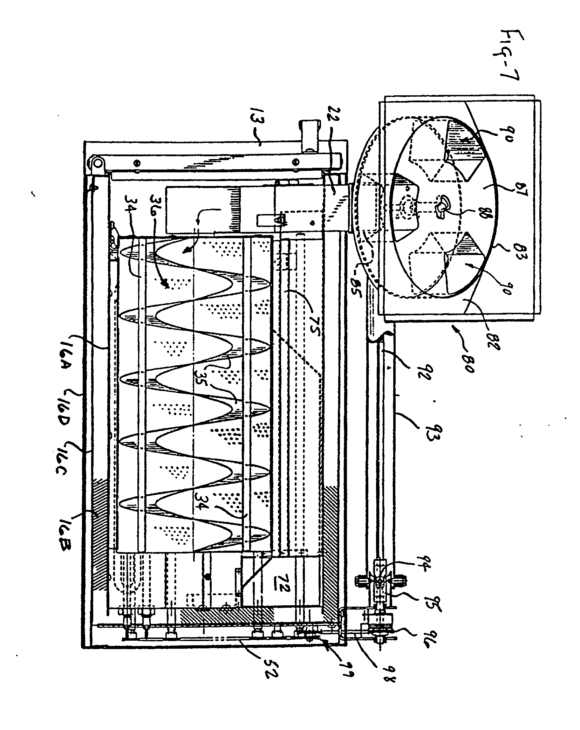

A drive means (Figs. 6 and 7) to rotate the shafts (and thus the cooking chambers) in synchronism is provided by sprockets 50 fixed to each shaft, in the space between the intermediate rear wall panel 14 C and the outer panel. A chain 52 extends around these sprockets and around a driving sprocket 54 on a variable speed drive motor 55 mounted in compartment 20 as previously described. Thus, each cooking chamber rests on the supporting and driving shafts, and it is possible to reach into the oven cavity 10 and simply lift the cooking chambers 25 out of the unit. To locate the rotatable cooking chambers, and to relieve the drive mechanism of endwise thrust forces, retaining rollers 56 are mounted to engage the front and rear edges of the cylindrical cooking chambers. Adjacent the rear wall 14, these rollers are simply supported on fixed brackets 57; adjacent the front, brackets 57A are pivotally supported, and held in their normal position with the rollers engaging the edge of the cylinders 25A and 25B, by suitable detents (not shown).

A transfer chute 58 within cavity 10 extends from the outlet end of the upper cooking chamber 25A to the inlet end of the lower cooking chamber 25B, to guide food portions from the upper to the lower chamber.

A cooking air supply manifold 60 is located extending lengthwise along a lower portion of the right side wall inner panel 16A, and occupies approximately the lower two-thirds of the space between wall panel 16A and the lower cooking chamber 24B, extending into proximity with a lower quadrant of the upper cooking chamber 24A (see Fig. 5). Manifold 60 has slot-like outlets 62 and 64 (see Fig. 12) directed against the outer surfaces of chambers 24A and 24B respectively, to direct heated air against the cylindrical walls 25 and through the perforations therein directly into and around the food portions contained in the cooking chambers.

A heating means 65, for example elongated electrical heating elements, is supported in air supply manifold 60 and extends most of the length of such manifold, to assure an ample supply of evenly heated air for the oven. Motor driven blowers 68 are mounted in the bottom compartment 20 and have their respective outlets connected into the manifold 60, so as to induce air flow over the heater 65 and through the manifold outlet slots 62 and 64. Internal baffles or partitions (not shown) may be located within manifold 60 as needed to assist in distributing the air flow, as desired, to the respective outlets 62 and 64.

Across cavity 10 there is a return air duct 70, also extending approximately the full length of the oven cavity, and connected by a return air manifold 72 to the inlets of the blowers 68. A filter 75 is removably mounted in the inward facing wall 70A of the return air duct, to pass and filter the recirculated air which is drawn therethrough by the blowers. The relationship of these ducts, manifolds, and the resultant forced convection air path, is illustrated in Fig. 12.

Door 13 is provided with a conventional handle and latch mechanism 77 having a thumb-operated release button 78. A spring-urged latch cooperates with a keeper on the door frame (not shown) to hold the door closed in normal operation, and to allow it to be released for opening, primarily for servicing/cleaning operations. In the self-cleaning mode (if used) later described, the release button 78 is interlocked against manual operation, to lock the door during periods when elevated temperatures exist for cleaning purposes. The door 13 need not be opened during normal cooking operations, since food portions are loaded into inlet chute 22, from whence they proceed to the upper cooking chamber 24A. The door is typically opened when it is desired to empty crumb tray 48 or to remove the cylindrical cooking chambers 24A, 24B for cleaning or repair. It should be noted that these chambers may be suitably dimensioned to fit in the wash chamber of a typical commercial warewashing machine, so they may be removed by lifting them off the supporting-driving shafts 40A,40B and 42A, 42B and out the opened door 13, for cleansing in such a machine.

A unit such as that described so far has been successfully operated to cook a substantial variety of food products. It has been found best to maintain an oven cavity temperature in the order of 420 to 430#F (215.5#C to 221.1#C) and to vary the rotational speed of the cooking chambers from about 0.25 rev./min. to about 2 re./min. In such unit the cooking chambers have a diameter of 10 inches (25.4 cm.), a length of 20 inches (50.8 cm.), and the helical member 35 is constructed with a lead of 4 inches (10.16cm.), in other words the spacing of parts of member 35 lengthwise of the chamber at a given longitudinal line is 4 inches.

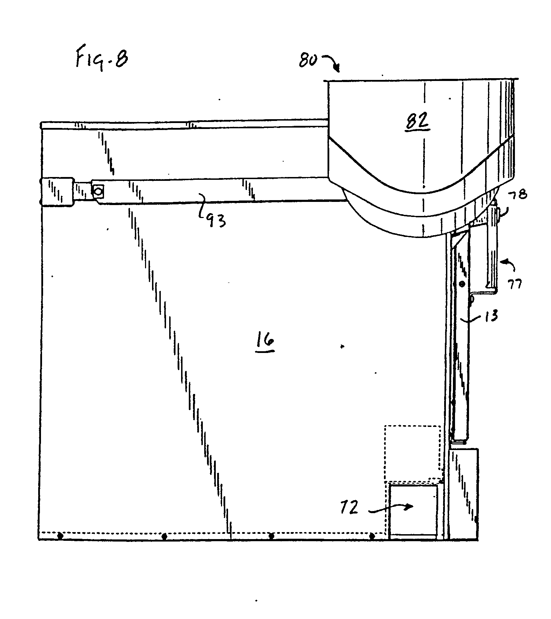

The optional feeder mechanism 80, shown in Fig. 7 and 8, provides for regularly-timed deposit of units or groups of food portions into the upper cylinder 25A. The feeder includes a housing 82 having a cylindrical cavity 83 with a bottom opening (approximately square) 85 which opens into the inlet chute 22. Within cavity 83 there is a power driven three-cavity rotor member 87 which is releasably coupled to a stub shaft 88 supported in housing 82. Each of the rotor member cavities 90 can receive a desired quantity (one or more food portions) which will drop through chute 22 into chamber 25A.

The rotor member 87 is driven by a bevel gear set (not shown) from an auxiliary drive shaft 92 housed in a tubular extension 93 of the feeder housing 82. Shaft 92 is coupled through a universal joint 94 to a short drive shaft 95 which is connected to a sprocket 96 (Fig. 5) by an electrically actuatable clutch 97. Sprocket 96 is in turn connected via chain 98 to a sprocket set 99 driven from chain 52. Thus, the feeder, if used, is rotated in synchronism with the rotational drive of the cooking chambers.

Also shown in Fig. 6 is a cooling fan 100 which is mounted in, and forces air through, the lower part of rear panel 14A forming the back of compartment 20. Thus, cooling air is forced over the blowers 68 and other components housed in compartment 20, and flows upward between the intermediate and outer wall panels to assist in lowering the temperature of the outer panels.

Fig. 13 shows a modified form of convection air system, in which heated recirculated air is supplied through separate circuits to the upper and lower cylindrical chambers 24A and 24B. The blowers 68a, driven by a common motor, receive air from the return duct 72a and force this air into supply ducts 60a and 60b which lead to separate air distributors 61a and 61# which are mounted adjacent a lower quadrant of the respective upper (24A) and lower (24B) chambers. The distributors have slot-like outlets 62a and 62b which direct the heated air against the outer surface of the perforated cylindrical cooking chambers.

In this embodiment, each of the air supply ducts 61a and 61b house heating elements 65a and 65#, respectively, which provide the heat needed for cooking, and if the oven includes a self-cleaning feature, for pyrolytic cleaning of the oven chamber interior. In some oven constructions according to the invention, the separate air supply ducts and heaters may be preferred in a dual cooking chamber oven to assure equal volume of convection air to both chambers. Since the overall function of this embodiment is essentially the same as the first embodiment described, the following description of the control circuit applies to both embodiments.

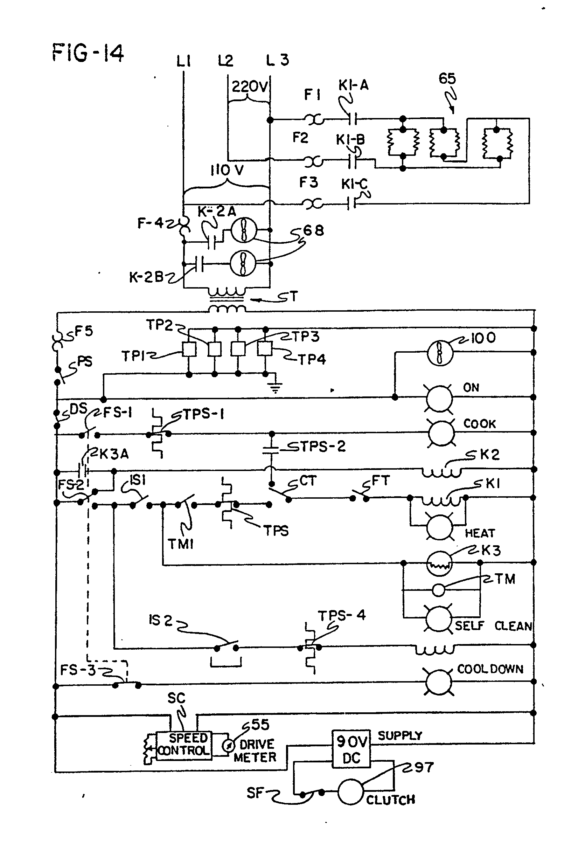

Fig. 14 illustrates a typical control circuit for the oven described herein. The electrical power supply is shown as lines L1, L2 and L3; 240 V AC is available across lines L1 and L3 and line L2 is the common.. Fuses F1, F2 and F3 are located to protect against overload in the electrical heater elements 65. Lines L1 and L3 are connected across the primary winding of a control circuit transformer T, and in parallel with the primary winding are connected the motors of the two air circulating (convection) blowers 68. A fuse F4 in line L1 protects against overload in these blower motors or the transformer primary side.

The secondary winding of transformer T supplies unregulated 120V AC to the various control circuits, relays, and to the oven chamber drive motor 55, the clutch 97 in the power drive shaft to the feeder mechanism 80, and cooling blower 100. A fuse F5 and manually operated power switch PS control the overall supply of electrical power to this circuit. Thus closing switch PS illuminates the ON indicator lamp, actuates cooling blower 100, and applies power to the control units TP1, TP2, TP3 and TP4 which are solid-state temperature responsive controls (e.g. electronic thermostats) driving circuit controlling switches TPS-1, TPS-2, TPS-3 and TPS-4. Switch TPS-1 is normally closed and opens when its control unit senses a temperature in excess of 500F in the oven cavity. Switch TPS-2 is normally closed, and will open when its control unit senses a preselected oven cavity temperature, in other words this controller and switch function as the cooking temperature regulator for the oven. Switch TPS-3 is normally closed and opens when its control unit senses an oven cavity temperature in excess of 1000#F, during the pyrolitic cleaning function. Switch TPS-4 is normally closed and opens when the oven cavity temperature exceeds 600#F; it is used, as later explained, to keep the door 13 locked when the temperature exceeds that value.

A function selector switch FS has three different switch parts, FS-1 which is the "cook" cycle selection, FS-2 which is the "clean" cycle selection, and FS-3 which is the "cool down" cycle selection. These three switches are interlocked, mechanically or electronically, such that only one can be effective. Thus, the operator can select one of these three functions to the exclusion of the others.

There are also a number of normally open mechanically closed switches which provide interlocks that require a certain placement of various parts of the oven. Switch DS requires that the door 13 be closed before power can be applied to any of the control circuits which initiate one of the three functions. Switch CT is closed only when the crumb tray 48 is properly in position in the oven cavity. Switch FT is closed only when air filter 75 is properly in position. Switch IS-1 is a normally open switch which is closed when the door 23D at the outlet chute 23 is closed. Switch IS2 is closed when door 13 is closed or in the closed/locked position for cleaning, and open when door 13 is open.

A speed controller SC provides power to the motor 55 and also controls its rotational speed, which in turn varies the rotational speed of cooking chambers 24A and 24B. A DC power supply CV provides power to energize clutch 97 in the auxiliary drive to the feeder mechanism. A normally open interlock switch SF is closed only when the feed housing 82 is properly mounted, so otherwise the drive to the feed mechanism is interrupted at clutch 97.

When the oven has been powered up, switch FS is set to the "cook" function, FS1 is closed, and the control unit TP-2 is set to the desired cooking temperature; it is assumed that air filter 75 and crumb tray 48 are in position, and the main door 13 is closed, but the outlet cover door 23D is open.

The ON indicator will be energized showing power is applied to the oven. Since switch FS is in the "cook" position, the COOK indicator also will be energized, and will remain so unless the control unit TP1 senses oven temperature in excess of 500#F and opens its switch TPS1. Power also will be applied through switch TPS2 of the temperature controller and switches CT and FT, to the coil of contactor relay K1 and the HEAT indicator which is wired in parallel with that coil. This results in closing contacts K1A--K1C, applying power to the heater means (coils) 65. Since switch FS2 is in the position shown (it transfers only when the "clean cycle" is selected), power is also supplied to coil K2 of the blower motor relay, its contacts K2A and K2B are closed, and flow of convection air begins in the oven cavity.

Power is also applied to the speed control SC, which in turn powers motor 55 to rotate at the chosen speed, and if the feed housing is in place, switch SF is closed and clutch 97 is energized to drive the feeder mechanism rotor 87. When the HEAT indicator first extinguishes, as the controller TP2 opens its switch TPS2 at the selected temperature, this is an indication that the oven is heated to the desired temperature and product can now be fed into the feed mechanism (or manually into the inlet 22 if the feed mechanism is not used). Residence time of food product in the oven will be determined by the speed selected for motor 55.

Moving the selector switch to the "cool down" mode opens FS1 and closes FS3. This deenergizes the heater control contactor K1, actuates the COOL DOWN indicator, and leaves the blowers 68 operating and the drive motor 55 running while the oven cools. The end of this period can be determined by an operator, at which time the switch PS is opened to remove power from the entire control circuit, stopping the blowers and drive motor.

To actuate the "cleaning" mode, for pyrolytic cleaning of the oven, switch FS is moved to the "clean" position and FS2 transfers to its normally open contact. The crumb tray 48 is removed and switch CT transfers to its normally open contact. Also, the door 23D is closed across the outlet opening, closing interlock switch IS1, and thus placing the heater control relay coil under the control of the high temperature controller switch TPS3 and a timer switch TI1. The temperature limit switch TPS4 is closed, assuming oven temperature below 600# F, and the door lock solenoid DL is energized to lock the latching mechanism 77 for door 13 in the closed position So long as the oven temperature remains above 600˚ F during a cleaning cycle, TPS4 is open and closing door interlock switch IS2 cannot energize the door lock solenoid DL to permit the door to be unlocked and opened.

Power is applied through FS2 and IS1 to the CLEAN indicator, to the driver TM of a cleaning period timer (e.g. two hour time out), and to the coil of an interrupter type relay K3 which, when energized, will close its contacts K3A for a short period, then open them, then reclose. The contacts K3A are wired into the circuit for powering the coil of blower relay K2, and the timer contacts TM1 are wired in series with switch TPS3, interlock switch IS1, and the selector switch FS2.

Therefore, the blowers 68 will be cycled on and off during the cleaning cycle, and that cycle will last for the timer duration. The temperature controller switch TPS3 functions as an over temperature safety to prevent heating above a preselected upper cleaning temperature, for example 1000#F. When the timer completes its period, power to the heater contactor relay coil K1 is interrupted, the heaters turn off, but the blowers continue to cycle and the motor 55 continues to rotates chambers 24A and 24B It should be noted that during the self cleaning cycle, the cooling fan 100 continues to operate and to move cooling air through interwall space of the oven cabinet.

While the method herein described, and the forms of apparatus for carrying this method into effect constitute preferred embodiments of this invention, it is to be understood that the invention is not limited to this precise method and forms of apparatus, and that changes may be made in either without departing from the scope of the invention, which is defined in the appended claims.

## Claims

1. A continuous convection oven comprising, a housing forming an outer oven cavity a supporting means extending generally horizontally across said oven cavity,
a cylindrical cooking chamber resting on said supporting means and including a perforate outer wall and a helical wall member extending inwardly of said outer wall defining a food portion carrying passage with an inlet end and an outlet end spaced along said cooking chamber,
means for rotating said cooking chamber and helical member to move food portions along said carrying passage,
convection air means including an air input manifold having an air directing outlet facing and extending along said cooking chamber,
means providing a return air duct in said oven cavity adjacent said cooking chamber,
means for recirculating air into said input manifold, through said cooking chamber into said oven cavity, and through said return duct in a predetermined path;
characterized by,
means in said oven cavity for heating the recirculating air prior to flow of such air through said outlet to said cooking chamber, and
means for guiding food portions to be cooked into said inlet end of said cooking chamber and for guiding cooked food portions from the outlet end of said cooking chamber in spaced relation to said air path, thereby minimizing the loss of heated air from the recirculating path.

2. An oven as defined in claim 1, wherein there are a pair of said cooking chambers supported in said oven cavity along vertically spaced generally horizontal axes,
the inlet end of the lower cooking chamber being generally located below the outlet end of the upper cooking chamber and means guiding food portions from the outlet of the upper chamber into the inlet of the lower chamber,
means for supplying food portions into said inlet end of said upper cooking chamber and means for carrying away cooked food portions from said outlet end of said lower cooking chamber,
said means for rotating being coupled to both of said cooking chambers whereby food portions enter at one end of said oven, progress at a predetermined rate through both cooking chambers, and exit at the same end of the oven.

3. An oven as defined in claim 1 or 2, including a variable speed control for said means for rotating said cooking chamber or chambers for adjusting the residence time of food portions in passing through the oven.

4. An oven as defined in claim 1 or 2, wherein said cooking chambers are removably mounted in said oven cavity and said helical member is removably mounted in said cooking chamber for cleaning purposes.

5. A cooking chamber for a continuous cooking oven as defined in claim 1, including:
an inlet baffle extending across one end of said cylindrical cooking chamber and having a central opening through which food portions can be fed into said carrying passage,
a plurality of ribs fixed to the periphery of said inlet baffle and extending parallel to each other along the length of said conveying member,
said ribs being fixed to said conveying member and providing therewith and with said baffle a removable insert located within said cylindrical wall.

6. An oven as defined in claim 2, including;
an inlet chute extending from the exterior of said cabinet to said inlet end of the upper said cooking chamber,
a transfer chute within said oven cavity extending from the outlet end of the upper cooking chamber to the inlet end of the lower cooking chamber, and an outlet chute extending from the outlet end of the lower cooking chamber to the exterior of said cabinet.

7. An oven as defined in claim 1, wherein said supporting means includes a plurality of shafts mounted extending parallel to each other longitudinally along said oven cavity and cradling said cooking chamber, means on at least one of said shafts for imparting to said cylindrical cooking chamber rotation about its longitudinal axis, drive means for rotating said one shaft at a predetermined speed, said drive means including means for varying its speed to adjust the residence time of food portions traveling along said carrying passage.

8. An oven as defined in claim 7, wherein said cooking chamber is removable from said cavity by lifting it away from said shafts.

9. An oven as defined in claim 7, including a drive wheel fixed to said one shaft and having tooth means engaging perforations in said cooking chamber.

10. A continuous convection oven as defined in claim 1, including cycle control means for operating said oven in a self-cleaning cycle including operating said heater means at a temperature sufficiently high to raise the temperature of the air substantially above cooking temperature and assure pyrolytic cleaning of soil from exposed parts of said cavity and said cooking chamber.

11. A continuous convection oven having a housing forming an outer oven cavity and a supporting means extending generally horizontally across said oven cavity, a cylindrical cooking chamber having a cylindrical wall with openings through at least a large portion of such wall, said chamber resting on said supporting means, means for rotating said cooking chamber, an inlet chute for guiding food portions to be cooked into said inlet end of said cooking chamber and an outlet chute for guiding cooked food portions from the outlet end of said cooking chamber, and a blower for circulating air through said cooking chamber; characterized by said cooking chamber including a perforate outer wall and a helical wall member extending inwardly of said outer wall no more than one -half the distance to the longitudinal axis of the chamber defining an open central passage lengthwise of the chamber surrounded by a food portion carrying passage with an inlet end and an outlet end spaced along said cooking chamber, a convection air supply duct receiving air from said blower and having an air directing outlet facing and extending along said cooking chamber, a return air duct in said oven cavity adjacent said cooking chamber and extending to said blower, means in said oven cavity outside said cooking chamber for heating the air recirculating through said ducts and blower prior to flow of such air through said outlet and against said cooking chamber.

FIG-1

FIG-2

FIG-3

FIG-4

FIG-5

FIG-6

Fig-7

Fig.8

80

82

78

77

93

13

16

72

Fig 9

Fig-10

Fig-11

FIG-12

FILTER / AIR RETURN MANIFOLD

HEATER / AIR IN MANIFOLD

BLOWERS

FIG-13

FIG-14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2082447 (MC GINTY) <br> * the whole document * | 1, 4, 11 | A47J37/04 <br> A47J39/00 |
| Y | | 2, 3, 5, 6, 7-9 | |
| Y | US-A-2727316 (NASELLI) <br> * the whole document * | 2, 6 | |
| Y | GB-A-1584222 (PRALUS) <br> * the whole document * | 3, 7-9 | |
| Y | DE-A-2247122 (MARCELISSEN) <br> * page 6, line 6 - line 19; figures 1, 2 * | 5 | |
| A | FR-A-2452906 (DYONA) <br> * the whole document * | 1 | |
| A | US-A-2939383 (KANAGA) <br> * column 3, line 17 - line 41; figures 1, 2 * | 7, 9 | |
| A | FR-A-1202467 (AUBERT-MAGUERO) <br> * the whole document * | 1, 3, 7 | TECHNICAL FIELDS SEARCHED (Int. Cl.5 ) |
| A | US-A-1820938 (CLANDROW) <br> * page 2, left-hand column, line 19 - page 3, left-hand column, line 35; figure 1 * | 2, 6 | A47J <br> A23L <br> A23N |
| A | EP-A-81420 (ETS EUGENE SCHOLTES) <br> * claim 1 * | 10 | |

The present search report has been drawn up for all claims

| Place of search | Date of completion of the search | Examiner |
|---|---|---|
| THE HAGUE | 07 SEPTEMBER 1989 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)